# EUROPÄISCHE PATENTSCHRIFT

(11) **EP 0 398 010 B1**
(45) Veröffentlichungstag und Bekanntmachung des Hinweises auf die Patenterteilung: **23.11.1994**
(21) Anmeldenummer: 90106535.9
(22) Anmeldetag: 05.04.1990
(51) Int. Cl.: B60R 22/18, B62D 1/18

(54) **Verriegelungsvorrichtung und Vorrichtung zum Straffen eines Sicherheitsgurtes in einem Fahrzeug, insbesondere Kraftfahrzeug**
Locking device and device for tensioning a safety belt in a vehicle, in particular in a motor vehicle
Dispositif de blocage et dispositif pour tendre une ceinture de sécurité dans un véhicule, en particulier dans un véhicule automobile

(30) Priorität: 13.05.1989 DE 3915723; 26.09.1989 DE 3932090; 03.10.1989 DE 3933009; 05.10.1989 DE 3933276
(43) Veröffentlichungstag der Anmeldung: 22.11.1990
(60) Teilanmeldung: 92118210.1
(73) Patentinhaber: HS TECHNIK + DESIGN TECHNISCHE ENTWICKLUNGEN GMBH, 80639 München (DE)
(72) Erfinder: Specht, Martin, D-8133 Feldafing (DE); Meyer, Rudolf, D-8063 Odelzhausen (DE)
(74) Vertreter: Nöth, Heinz, Dipl.-Phys.

(56) Entgegenhaltungen:
- EP-A- 0 195 268
- EP-A- 0 305 765
- DE-U- 890 013
- DE-U- 8 812 853
- DE-U- 8 813 979
- FR-A- 2 382 903

## Beschreibung

Die Erfindung betrifft eine Verriegelungsvorrichtung nach dem Oberbegriff des Patentanspruchs 1.

Eine derartige aus der EP-A-195 268 bekannte Verriegelungsvorrichtung dient zum Festhalten von wenigstens zwei durch Krafteinwirkung relativ zueinander bewegliche Teile in einer verriegelten Position, welche einer Ruheposition entspricht, und ist mit einem Auslösemechanismus ausgestattet, durch den die beiden Teile aus ihrer verriegelten Position gelöst werden können. Die bekannte Vorrichtung kann bei einem Sicherheitsgurtstraffer Sensorfunktion übernehmen.

Aufgabe der Erfindung ist es, eine Verriegelungsvorrichtung der eingangs genannten Art zu schaffen, bei der die Sensibilität erhöht ist.

Diese Aufgabe wird erfindungsgemäß durch die kennzeichnenden Merkmale des Patentanspruchs 1 gelöst.

Die Unteransprüche kennzeichnen Weiterbildungen der Erfindung.

Die Verriegelungsvorrichtung kommt bevorzugt in Sicherheitssystemen, wie Lenksäulenverkürzungssystemen, Sicherheitsgurtsystemen und überall dort, wo aufgrund äußerer Überbelastungen Verriegelungen gelöst werden müssen, zum Einsatz. Bevorzugt kommt die Verriegelungsvorrichtung bei einer Vorrichtung zum Straffen eines Sicherheitsgurtes in einem Fahrzeug zum Einsatz.

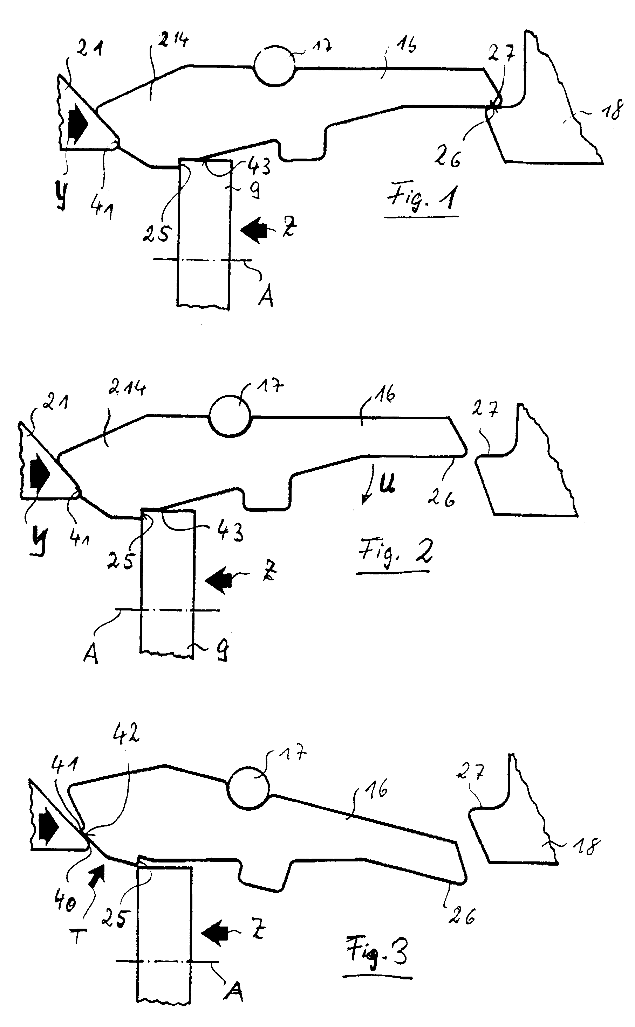

Die Figuren 1 bis 3 zeigen ein Ausführungsbeispiel in verschiedenen Betriebszuständen.

Die dargestellte Verriegelungsvorrichtung besitzt ein Verriegelungselement 214, das zwischen zwei zu verriegelnden Teilen 9 und 21 zur Wirkung kommt. Die beiden Teile 9 und 21 sind gegeneinander verschiebbar, beispielsweise in Richtung der dargestellten, einander entgegengerichteten Pfeile Y und Z in der Fig. 1. In der in der Fig. 1 dargestellten Stellung befinden sich die beiden beweglichen Teile 9 und 21 sowie das Verriegelungselement 214 in ihrer Ruheposition.

Das Verriegelungselement 214 besitzt wenigstens zwei Abstützstellen 25 und 41, an denen die beiden beweglichen Teile 9 und 21 anliegen. Es handelt sich hier, wie insbesondere aus der Fig. 3 zu ersehen ist, um Flächenteile am Verriegelungselement 214, die einander entgegengerichtet sind und im wesentlichen senkrecht zu den Bewegungsrichtungen (Pfeile Y und Z), insbesondere zur Bewegungsrichtung Z, verlaufen. Gegen diese Abstützstellen 25 und 41 sind in der Ruheposition (Fig. 1) die beiden beweglichen Teile 9 und 21 angedrückt. Die Druckkraft, welche in Richtung der beiden Pfeile Y und Z wirkt, kann hierbei von einer Druckfeder vermittelt werden. Die Anpreßkraft, mit der die beiden Teile 9 und 21 gegen die Abstützstellen 25 und 41 des Verriegelungselementes 214 angedrückt werden, kann jedoch auch von einer anders gearteten Krafterzeugungsquelle herrühren.

Das dargestellte Ausführungsbeispiel der Verriegelungsvorrichtung besitzt ferner eine Anschlageinrichtung, die eine Anschlagfläche 27 aufweist, welche an ein fest eingebautes Konstruktionsteil 18 angeformt ist. An das Verriegelungselement 214 ist ein Sperrhebel 16 angeformt, der eine Anschlagfläche 26 aufweist, die in Ruheposition an der Anschlagfläche 27 anliegt (Fig. 1).

Die beiden Abstützstellen 25 und 41 am Verriegelungselement 214 sind versetzt zueinander angeordnet, so daß durch die Druckkräfte in Richtung Pfeile Y und Z auf das Verriegelungselement 214 ein Drehmoment um eine Schwenkachse 43 wirkt. Diese Schwenkachse 43 wird gebildet durch eine Abstützstelle des Verriegelungselementes 214 an dem einen zu verriegelnden Teil 9.

Ferner ist eine Feder 17 vorgesehen, die das Drehmonent, welches auf das Verriegelungselement 214 wirkt, noch unterstützt. Durch dieses Drehmonent, welches in einer Entriegelungsrichtung wirkt, wie noch erläutert wird, und daher auch als Entriegelungsmoment bezeichnet werden kann, wird eine Andrückkraft, mit der die beiden Anschlagflächen 26 und 27 aneinanderliegen, erzeugt.

Wenn auf die in der Fig. 1 dargestellte Verriegelungsvorrichtung eine äußere Kraft einwirkt, die bei der dargestellten Ausführungsform über das bewegliche Teil 9 eingeleitet wird, stellen die beiden beweglichen Teile 9 und 21 sowie das Verriegelungselement 214 mit dem angeformten Sperrhebel 16 eine Bewegungseinheit dar, die insgesamt in Richtung des Pfeiles Z bewegt wird und sich damit von dem ortsfesten Konstruktionsteil 18 entfernt. Hierdurch werden auch die beiden Anschlagflächen 26 und 27 voneinander entfernt, so daß der Sperrhebel 16 von der Anschlageinrichtung (Anschlagfläche 27 und ortsfester Konstruktionsteil 18) entfernt wird.

In dieser in der Fig. 2 dargestellten Betriebsstellung kommt das Entriegelungsmoment, welches oben im einzelnen erläutert wurde, zur Auswirkung in der Weise, daß das Verriegelungselement 214 und der angeformte Sperrhebel 16 in der Figur im Uhrzeigersinn (Pfeil U) um die Schwenkachse 43 verschwenkt wird.

Das Verriegelungselement 214 und der angeformte Sperrhebel 16 werden dabei in eine in der Fig. 3 dargestellte Stellung gebracht. Hierbei kommt die Abstützstelle 41 mit dem Teil 21, insbesondere mit einer Abstützfläche 40 am Teil 21, außer Eingriff, so daß das Teil 21 sich in Richtung des Pfeiles Y bewegen kann. Dabei wird das Verriegelungselement 214 entlang einer schrägen Fläche 42 am Teil 21 verschoben, so daß der andere bewegliche Teil 9 mit der Abstützstelle 25 außer Eingriff kommt. Durch einen Pfeil T in Fig. 3 ist die Bewegungskomponente, welche das Verriegelungselement 214 hierbei ausführt, verdeutlicht.

Das Teil 9 ist dann freigegeben, so daß es sich in Richtung des Pfeiles Z frei bewegen kann. Auf diese Weise läßt sich dann, wenn an das Teil 9 ein Kraftspeicher angeschlossen ist, eine Bewegungskomponente erzeugen, die in der Ruheposition der Verriegelungsvorrichtung verriegelt bzw. blockiert war. Diese Bewegungskomponente kann dann auf andere Konstruktionsteile in gewünschter Weise übertragen werden.

Die in den Figuren 1 bis 3 dargestellte Verriegelungsvorrichtung kann in einer Mehrfachanordnung um eine Achse A angeordnet sein. Die Verriegelungsvorrichtungen besitzen dann bevorzugt gleiche Winkelabstände voneinander. Die Feder 17 ist dann ringförmig ausgebildet, und dieser Ring besitzt dann ferner die Funktion einer Halteeinrichtung, mit welcher in der Ruheposition (Fig. 1) die Einzelteile der Verriegelungsvorrichtung, insbesondere die Verriegelungselemente 214, in Position auf dem zu verriegelnden Teil 9 gehalten werden, wobei die Verriegelungselemente 214 an Abstützstellen, welche die Schwenkachsen 43 bilden, am zu verriegelnden Teil 9 abgestützt sind. Wie schon erläutert, wirkt auch hierbei die ringförmige Feder 17 unterstützend zur Erzeugung des erläuterten Entriegelungsmoments, welches in der Figur in Uhrzeigersinn-Richtung um die Schwenkachse 43 wirkt.

Bei der von außen auf das Teil 9 einwirkenden Kraft kann es sich um eine durch überhöhte Beschleunigung verursachte Kraft handeln. Aus obiger Erläuterung wird ersichtlich, daß in der dargestellten Verriegelungsvorrichtung durch die beiden Anschlagflächen 26 und 27 die Bewegungsstrecke bestimmt wird, welche die aus den Teilen 9 und 21 sowie dem Verriegelungselement 214 und angeformtem Sperrhebel 16 bestehende Bewegungseinrichtung zurücklegt, damit die beiden Anschlagflächen 26 und 27 außer Eingriff kommen. Das Entriegelungsmoment vermittelt die Andrückkraft, mit welcher in Ruhestellung die beiden Anschlagflächen 26 und 27 aufeinandergedrückt werden.

Zusätzlich kann noch eine auf das Teil 9 wirkende Feder vorgesehen sein.

Die Verriegelungsvorrichtung kann bei der Erzeugung von Verstellbewegungen, die verriegelt sind und oberhalb eines bestimmten Schwellenwertes einer einwirkenden Kraft zur Auswirkung kommen, zum Einsatz gebracht werden. Beispielsweise kann die dargestellte Verriegelungsvorrichtung bei der Verkürzung einer Lenkradsäule in einem Kraftfahrzeug zur Anwendung kommen. Ferner kann die Verriegelungsvorrichtung im Zusammenhang mit der Erzeugung einer Rückstrammbewegungskomponente zur Beseitigung einer Gurtlose aus einem Sicherheitsgurt zum Einsatz kommen.

## Patentansprüche

1. Verriegelungsvorrichtung zum Festhalten von wenigstens zwei durch Krafteinwirkung relativ zueinander beweglichen Teilen in einer verriegelten Position mit
- einem Verriegelungselement (214) mit wenigstens zwei Abstützstellen (25, 41), an welchen die wenigstens zwei relativ zueinander beweglichen Teile (9, 21) anliegen;
- einer Schwenkachse (43), um die das Verriegelungselement (214) aufgrund eines die Verriegelung lösenden Entriegelungsmoments drehbar ist;
- einer ortsfesten Anschlageinrichtung (18, 27), an welcher in verriegelter Position das Verriegelungselement (214) aufgrund des Entriegelungsmoments anliegt;
- einer in verriegeltem Zustand das eine Teil (9) und das Verriegelungselement (214) enthaltenden Bewegungseinheit, die von der Anschlageinrichtung (18, 27) zumindest so weit weg beweglich ist, daß das Verriegelungselement (214) von der Anschlageinrichtung (18, 27) gelöst ist,
dadurch **gekennzeichnet,** daß
- die Bewegungseinheit die beiden zueinander beweglichen Teile (9, 21) enthält und durch äußere Krafteinwirkung bewegbar ist und
- das Entriegelungsmoment durch zwei in entgegengesetzter Richtung wirkende und an zwei um einen Abstand versetzten Kraftangriffspunkten am Verriegelungselement (214) angreifenden Kräften gebildet ist.

2. Verriegelungsvorrichtung nach Anspruch 1, dadurch gekennzeichnet, daß zur Bildung des um die Schwenkachse (43) wirkenden Entriegelungsmoments die Abstützstellen (25, 41) am Verriegelungselement (214) bezüglich der Bewegungsrichtung (Z) der Bewegungseinheit versetzt zueinander liegen.

3. Verriegelungsvorrichtung nach Anspruch 1 oder 2, dadurch gekennzeichnet, daß eine am Verriegelungselement (214) angreifende Feder (17) vorgesehen ist, die eine zusätzliche Kraft für das Entriegelungsmoment liefert.

4. Verriegelungsvorrichtung nach einem der Ansprüche 1 bis 3, dadurch gekennzeichnet, daß an das Verriegelungselement (214) ein Sperrhebel (16) angeformt ist, der in verriegelter Position an der Anschlageinrichtung (18, 27) anliegt.

5. Verriegelungsvorrichtung nach einem der Ansprüche 1 bis 4, dadurch gekennzeichnet, daß mehrere Verriegelungselemente (214) um eine in der Bewegungsrichtung (Z) der Bewegungseinheit verlaufende Achse (A) angeordnet sind und die Abstützstellen (25, 41) gegenüber der Achse (A) unterschiedliche radiale Abstände aufweisen.

6. Verriegelungsvorrichtung nach einem der Ansprüche 1 bis 5, dadurch gekennzeichnet, daß die beiden Abstützstellen (25, 41) an jedem Verriegelungselement (214) von zwei entgegengesetzt gerichteten Flächen gebildet sind.

7. Verriegelungsvorrichtung nach einem der Ansprüche 1 bis 6, dadurch gekennzeichnet, daß die in die Bewegungseinheit eingeleitete Kraft, welche die von der Anschlageinrichtung (18, 27) weg gerichtete Bewegungskomponente (Z) erzeugt, über einen der beiden Teile (9, 21) unter Beibehaltung des auf das Verriegelungselement (214) einwirkenden Entriegelungsmoments so lange anliegen, bis das Verriegelungselement (214) von der Anschlageinrichtung (18, 27) getrennt ist.

8. Verriegelungsvorrichtung nach einem der Ansprüche 1 bis 7, dadurch gekennzeichnet, daß die beiden Teile (9, 21) durch eine gemeinsame, an beide Teile (9, 21) angreifende Druckfeder gegen das Verriegelungselement (214) gedrückt sind.

9. Verriegelungsvorrichtung nach einem der Ansprüche 1 bis 8, dadurch gekennzeichnet, daß die Druckfeder ebenfalls Bestandteil der Bewegungseinheit ist.

## Claims

1. A locking device for fixing at least two members which are moveable relative to each other under the effect of a force in a locked position comprising:
- a locking member (214) having at least two support locations (25,41) against which the at least two members (9, 21) which are moveable relative to each other bear;
- a pivot axis (43) about which the locking member (214) is rotatable due to an unlocking moment for releasing the locking action;
- a stationary abutment means (18, 27) against which the locking member (214) bears in the locked position due to the unlocking moment; and
- a motion unit which in the locked condition includes the one member (9) and the locking member (214) and which is moveable at least so far away from the abutment means (18, 27) that the locking member (214) is released from the abutment means (18, 27),
characterised in that
- the motion unit includes the two members (9, 21) which are moveable relative to each other and is moveable by an external force acting thereon, and
- the unlocking moment is formed by two forces which act in opposite directions and which engage two spaced-apart force engagement points on the locking member (214).

2. A locking device according to claim 1 characterised in that to form the unlocking moment which acts about the pivot axis (43) the support locations (25, 41) are disposed in mutually displaced relationship on the locking member (214) relative to the direction of movement (Z) of the motion unit.

3. A locking device according to claim 1 or claim 2 characterised in that there is provided a spring (14) which acts on the locking member (214) and which produces an additional force for the unlocking moment.

4. A locking device according to one of claims 1 to 3 characterised in that formed on the locking member (214) is a lock lever (16) which in the locked position bears against the abutment means (18, 27).

5. A locking device according to one of claims 1 to 4 characterised in that a plurality of locking members (214) are arranged around an exis (A) extending in the direction of movement (Z) of the motion unit and the support locations (25, 41) are at different radial spacings relative to the axis (A).

6. A locking device according to one of claims 1 to 5 characterised in that the two support locations (25, 41) on each locking member (214) are formed by two oppositely directed surfaces.

7. A locking device according to one of claims 1 to 6 characterised in that the force which is applied to the motion unit and which produces a motion component (Z) which is directed away from the abutment means (18, 27) is applied by way of one of the two members (9, 21), with the unlocking moment which acts on the locking member (214) being maintained, until the locking member (214) is separated from the abutment means (18, 27).

8. A locking device according to one of claims 1 to 7 characterised in that the two members (9, 21) are pressed against the locking member (214) by a common compression spring which engages both members (9, 21).

9. A locking device according to one of claims 1 to 8 characterised in that the compression spring is also a component of the motion unit.

## Revendications

1. Dispositif de verrouillage pour maintenir au moins deux éléments déplaçables l'un par rapport a' l'autre sous l'effet d'une forcer dans une position verrouillée, comprenant
- un élément de verrouillage (214) avec au moins deux points d'appui (25, 41) contre lesquels sont appliqués au moins les deux éléments (9, 21) déplaçables l'un par rapport à l'autre;
- un axe de pivotement (43) autour duquel l'élément de verrouillage (214) peut tourner sous l'effet d'un moment de déverrouillage débloquant le verrouillage;
- un dispositif d'arrêt (18, 27) fixe contre lequel l'élément de verrouillage (214) est appliqué dans la position verrouillée du fait du moment de déverrouillage;
- une unité cinématique qui comporte l'un des éléments (9) et l'élément de verrouillage (214) et peut être écartée du dispositif d'arrêt (18, 27) au moins suffisamment pour que l'élément de verrouillage (214) soit dégagé dudit dispositif d'arrêt (18, 27),
**caractérisé en ce** que
- l'unité cinématique comporte les deux éléments (9, 21) déplaçables l'un par rapport à l'autre et qu'elle peut être déplacée par l'application d'une force extérieure, et que
- le moment de déverrouillage est formé par deux forces opposées qui agissent sur l'élément de verrouillage (214) en deux points d'application de force décalés l'un par rapport à l'autre.

2. Dispositif de verrouillage selon la revendication 1, caractérisé en ce que, pour la production du moment de déverrouillage agissant autour de l'axe de pivotement (43), les points d'appui (25, 41) sur l'élément de verrouillage (214) sont décalés l'un par rapport à l'autre en ce qui concerne la direction de mouvement (Z) de l'unité cinématique.

3. Dispositif de verrouillage selon l'une des revendications 1 ou 2, caractérisé en ce qu'il comprend un ressort (17) qui agit sur l'élément de verrouillage (214) et fournit une force supplémentaire pour le moment de déverrouillage.

4. Dispositif de verrouillage selon l'une des revendications 1 à 3, caractérisé en ce que sur l'élément de verrouillage (214) est conformé un levier de blocage (16) qui, dans la position verrouillée, est appliqué contre le dispositif d'arrêt (18, 27).

5. Dispositif de verrouillage selon l'une des revendications 1 à 4, caractérisé en ce que plusieurs éléments de verrouillage (214) sont disposés autour d'un axe (A) qui s'étend dans la direction de mouvement (Z) de l'unité cinématique, et que les points d'appui (25, 41) présentent par rapport à l'axe (A) des distances radiales variables.

6. Dispositif de verrouillage selon l'une des revendications 1 à 5, caractérisé en ce que les deux points d'appui (25, 41) sur chaque élément de verrouillage (214) sont constitués par deux surfaces dirigées en sens inverse.

7. Dispositif de verrouillage selon l'une des revendications 1 à 6, caractérisé en ce que la force introduite dans l'unité cinématique qui produit la composante de mouvement (Z) dirigée dans le sens opposé au dispositif d'arrêt (18, 27), est appliquée par l'intermédiaire de l'un des deux éléments (9, 21), avec conservation du moment de déverrouillage agissant sur l'élément de verrouillage (214), jusqu'à ce que ledit élément de verrouillage (214) soit séparé du dispositif d'arrêt (18, 27).

8. Dispositif de verrouillage selon l'une des revendications 1 à 7, caractérisé en ce que les deux éléments (9, 21) sont appliqués contre l'élément de verrouillage (214) par un ressort de pression commun qui agit sur les deux éléments (9, 21).

9. Dispositif de verrouillage selon l'une des revendications 1 à 8, caractérisé en ce que le ressort de pression fait, lui aussi, partie de l'unité cinématique.
